# EUROPÄISCHE PATENTANMELDUNG

(11) **EP 1 024 570 A2**
(43) Veröffentlichungstag der Anmeldung: **02.08.2000**
(21) Anmeldenummer: 00101669.0
(22) Anmeldetag: 28.01.2000
(51) Int. Cl.: H02G 3/32

(54) **System zur Befestigung und/oder Führung von isolierten elektrischen leitungen und/oder Kabeln**

(30) Priorität: 29.01.1999 DE 29901530 U
(71) Anmelder: Mechanik Center Erlangen GmbH, 91058 Erlangen (DE)
(72) Erfinder: Hausner, Manfred, 91031 Forchheim (DE)
(74) Vertreter: Zedlitz, Peter, Dipl.-Inf.

(57) **Zusammenfassung**

Bei einem System zur Befestigung und/oder Führung von isolierten elektrischen Leitungen und/oder Kabeln, mit mindestens einem schellenartigen Formteil, das zur Führung wenigstens einer Leitung und/oder eines Kabels ausgebildet ist, sind mehrere schellenartige Formteile wechselseitig miteinander verbindbar und zu einer den jeweiligen Anforderungen entsprechenden Anordnung für eine Mehrzahl von Leitungen und/oder Kabeln aufbaubar. Erfindungsgemäß werden von der Anordnung wenigstens ein Kabel (10) zum Funktionserhalt umschlossen, wozu das schellenartige Formteil (1, 2, 3) an den beiden Enden abgekröpft ausgebildet und zumindest in diesem Bereich mit einer Funktionsbeschichtung gegen Korrosion und Ausbildung von Unebenheiten aufgrund von Korrosion auf der Oberfläche versehen ist, so daß auch im Fehlerfall das Kabel (10, 20, ...) zum Funktionserhalt derart geführt bleibt, daß ein Kurzschluß der metallischen Leiter durch die Unebenheiten, insbesondere Kanten, des Formteils (1, 2, 3) ausgeschlossen ist, und daß in der Anordnung neben dem wenigstens einen Kabel (10) zum Funktionserhalt weitere Leitungen und/oder Kabel (20, 30, ...) gleichen oder unterschiedlichen Querschnittes neben- und/oder übereinender parallel geführt werden. Damit ist den baurechtlichen Regelungen und/oder Vorgaben Genüge getan.

## Beschreibung

Die Erfindung bezieht sich auf ein System zur Befestigung und/oder Führung von elektrischen Leitungen und/oder Kabeln, mit mindestens einem schellenartigen Formteil, das wenigstens ein Längsbett zur Führung einer Leitung und/oder eines Kabels aufweist, wobei mehrere schellenartige Formteile wechselseitig miteinander verbindbar und zu einer den jeweiligen Anforderungen entsprechenden Anordnung für eine Mehrzahl von Leitungen und/oder Kabeln ausbildbar ist.

Systeme zur Befestigung und/oder Führung von elektrischen Leitungen und/oder Kabeln sind vom Stand der Technik bekannt. Sie bestehen üblicherweise aus metallischen, miteinander verbindbaren Formteilen, sog. Schellen, mit Einlegeprofilen, in welche die Leitungen oder die Kabel eingelegt bzw. eingeklemmt werden. In der DE 295 03 361 U1 wird beispielhaft eine Sammelhalterung für Kabel, Rohre od. dgl. beschrieben, mit der eine gewisse Anzahl von insbesondere Kabeln gemeinsam in einem metallischen Bügel, die im Querschnitt etwa U-förmig ausgebildet ist, gehalten wird. Eine separate Führung einzelner Kabel zur Gewährleistung von Sicherheitsbestimmungen ist dabei nicht vorgesehen.

Beispielsweise in Gebäuden werden Leitungen wand- und deckennah geführt, wobei zur Befestigung in bestimmten Abständen vorbekannte Klemmsysteme mit sog. Schellen eingesetzt werden. Dabei kommt es darauf an, mit diesen Systemen in den Schellen die Kabel und/oder Leitungen sicher zu führen, so daß sie den dazwischenliegenden freien Raum überbrücken können. Üblicherweise kann dieser frei überbrückbare Raum um so größer sein, je länger die schellenartigen Formteile mit ihren Einlegprofilen ausgebildet sind. Für die Praxis wird dabei ein Kompromiß gesucht.

Im Rahmen einer heute als notwendig erachteten Sicherheitsstromversorgung wird gefordert, bei Leitungssystemen auch Kabel mit 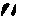 Funktionserhalt" vorzusehen. Dies sind Kabel entsprechend DIN VDE 0266 oder auch DIN VDE 0276-604, mit denen besondere Sicherheitsbestimmungen definiert werden. Insbesondere sind bei Kabeln mit Kunststoffmantel mit oder ohne Abschirmung für die konzentrischen Leiter die einzelnen Leiter elektrisch isoliert. Eine Trennschicht ermöglicht den Funktionserhalt, wozu beispielsweise Glimmerbänder verwendet werden. Wesentlich ist dabei , daß im Brandfall, kein Kurzschluß einzelner Leiter entstehen kann. Dafür sorgt z.B. die Glimmerschicht auf dem metallischen Leiter, welche nicht brennbar ist. Allerdings sind solche Glimmerschichten im Brandfall aufgrund der hohen Temperaturen hohen Belastungen ausgesetzt, bedingt dadurch, daß im Brandverlauf die Kabel zwangsläufig über Kanten geführt werden. Deshalb muß Wert auf eine gute Führung des Kabels im Leitungsbett gelegt werden.

Speziell in größeren Gebäuden, z.B. Krankenhäuser, Warenhäuser, öffentliche Gebäude od. dgl., werden eine Vielzahl von unterschiedlichsten Kabel- und Leitungen benötigt und verlegt. Meist ist die Verlegung dieser Kabel unter der Vorgabe engster Platzverhältnisse zu realisieren. Dadurch ist die Verlegung nicht nur nebeneinander sondern auch mehrfach übereinander erforderlich. Unter diesen erschwerten Gegebenheiten muß entsprechend baulicher Forderung auch der Funktionserhalt von Kabelanlagen im Brandfall realisiert werden. Aus dem MEC-Katalog 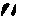 Kabel- und Leitungsschellen" 1997 ist ein System der eingangs genannten Art bekannt, mit dem durch eine Vielzahl unterschiedlicher metallischer Formteile für die jeweiligen Anforderungen geeignete Anordnungen aufbaubar sind. Der Standard dieses Systemprogamms war unter den bisherigen Gegebenheiten durch die Aüsführung des Schellenmaterials nicht für den Funktionserhalt geeignet.

Für eine langwegige Führung eines oder mehrerer Kabel mit Funktionserhalt in einem metallischen Einlegeprofil wurde bereits auch schon vorgeschlagen, das Profil als halbzylindrische Einlegwanne für einen vorgegebenen Kabeldurchmesser auszuformen, wobei die Einlegwanne mit einem, im Querschnitt etwa U-förmig ausgebildet metallischen Bügel gehalten wird. An den beiden Enden der Einlegwanne ist dabei jeweils eine allmähliche Aufweitung des Profils vorgesehen, damit das zwischen zwei benachbarten Einlegwannen durchhängende Sicherheitskabel ohne mechanische Verspannungen weggeführt werden kann. In dieser Einlegwanne wird also jeweils ein einzelnes Sicherheitskabel geführt, während für die übrigen Leitungen und Kabel Sammelhalterungen, z.B. sog. Führungsleitern oder sog. Führungsrinnen, vorgesehen sind.

Der Nachweis der Funktionstüchtigkeit von Kabel- und Leitungen im Brandfall ist zwangsläufig abhängig von der Qualität des Verlegematerials. Dieser Nachweis muß im Einzelfall in ausreichendem Maße erbracht werden und hängt von der Kombination der Kabel und Leitungen mit dem zugehörigen Befestigungssystem ab.

Aufgabe der Erfindung ist es daher, ein System zu schaffen, das im gleichen Aufbau zur Führung und/oder Befestigung aller Leitungen und/oder Kabeln geeignet ist und alle Sicherheitsbestimmungen erfüllt. Insbesondere sollen für solche Systeme die amtlichen Prüfzeugnisse erreichbar sein, was nur dann der Fall ist, wenn beim Kabel für den Funktionserhalt auch nach Abbrennen der elektrischen Isolierungen weder ein Kurzschluß noch ein Leiterbruch auftritt. Dazu ist es erforderlich, daß insbesondere bei den bisher standardmäßig eingesetzten Schellen besondere Kabelführungseigenschaften realisiert werden, die für übliche Leitungen ansonsten nicht notwendig wären.

Die Aufgabe ist erfindungsgemäß durch die Kombination aller Merkmale des Patentanspruches 1 gelöst. Weiterbildungen des erfindungsgemäßen Systems sind in den Unteransprüche angegeben.

Mit der Erfindung wird erreicht, daß bei einem System der eingangs genannten Art in die von den Formteilen aufgebaute Anordnungen wenigstens ein Kabel zum Funktionserhalt einlegbar ist, wobei die schellenartigen Formteile an den Enden abgekröpft ausgebildet und mit einer Funktionsbeschichtung versehen ist, so daß im Fehlerfall das Kabel zum Funktionserhalt geführt bleibt und kein Kurzschluß der metallischen Leiter durch Unebenheiten, wie scharfe Kanten und/oder Spitzen, an der Oberfläche der Formteile auftritt. Wesentlich ist dabei, daß neben dem wenigstens einen Kabel mit Funktionserhalt weitere Leitungen und/oder Kabel gleichen oder unterschiedlichen Querschnittes bei Beachtung der baulichen Vorgaben neben- und/oder übereinander parallel geführt werden können.

Mit der Erfindung wird erreicht, daß für die einzelnen Formteile jeweils eigene Sicherungselemente zum Einsatz kommen. Diese Sicherungselemente sind Halte- bzw. Befestigungsmuttern auf Vertikalbolzen für das Zusammenhalten der Formteile, die einerseits das zumindest eine Kabel zum Funktionserhalt und andererseits weitere Kabel und Leitungen umschließen.

Bei der Erfindung bestehen die schellenartigen Formteile aus Metall, das in spezifischer Ausbildung in an sich bekannter Weise verzinkt und/oder chromatiert ist. Vorzugsweise ist die durch die Verzinkung und Chromatierung erzeugte Schicht im Vergleich zum Stand der Technik von einer erheblich größeren Stärke, insbesondere mindestens etwa 20 µm. Durch diese besonders große Schichtdicke wird in jedem Fall eine glatte Oberfläche erreicht, so daß sich auch im Bereich der Abkröpfung ein sanfter Übergang ergibt. Scharfe Kanten sind somit von vornherein weitestgehend ausgeschlossen, wobei auch diese Kanten noch verrundet sind.

Mit der Erfindung ist ein gegenüber dem Stand der Technik verbessertes System aus Standardbauteilen geschaffen, das an die jeweiligen Erfordernisse anpaßbar ist. Jeweils zwei Formteile können - spiegelbildlich zueinander angeordnet - miteinander mechanisch verbunden werden und bilden so eine Schelle zur Aufnahme von Kabeln und/oder Leitungen. Es kann so ein mehrlagiges System konzipiert werden. Insbesondere können die Verbindungsbolzen, die endseitig in üblicherweise an Gebäudedecken und -wänden vorhandene C-Schienen einklinkbar sind, verlängert werden, so daß ein vielfach variables System geschaffen ist. Durch die günstigen Eigenschaften des erfindungsgemäßen Systems sind erstmalig die Voraussetzungen gemäß DIN 4102-12 für den Funktionserhalt von Kabeln und/oder Leitungen erfüllt.

Besonders vorteilhaft ist bei der Erfindung, daß die Kabel- und Leitungsschellen in ihrem Aufbau speziell für den Extremfall, d.h. Funktionserhalt im Brandfall, ausgelegt sind. Alle einzelnen Befestigungselemente sind anhand engster Fertigungsvorgaben hergestellt. Insbesondere sind die Kabelschellen so geformt, daß keine scharfen Kanten und Ecken in das erwärmte Kabel eindrücken können. Notwendige Haltebolzen sind in der Tragfähigkeit so ausgelegt, daß auch hohe Temperaturen überstanden werden. Die thermische Belastung ist nach der Aufstellung aus DIN 4102, Teil 2 (ISO 834, Teil 1) verifiziert. Der Funktionserhalt des erfindungsgemäßen Systems konnte in einer anerkannten Prüfanstalt nachgewiesen werden.

Weitere Einzelheiten und Vorteile der Erfindung ergeben sich durch die Figurenbeschreibung von Ausführungsbeispielen anhand der Zeichnung in Verbindung mit weiteren Unteransprüchen. Es zeigen in jeweils schematischer Darstellung
- FIG 1: die Draufsicht auf ein erstes, einzelnes schellenartiges Formteil,
- FIG 2: die seitliche Ansicht eines Teiles gemäß FIG 1,
- FIG 3 und 4: entsprechende Darstellungen eines zweiten schellenartigen Formteils,
- FIG 5 und 6: entsprechende Darstellungen eines dritten schellenartigen Formteil, sowie die
- FIG 7 bis 14: in Schnittdarstellung unterschiedliche Systemaufbauten unter Verwendung der Erfindung.

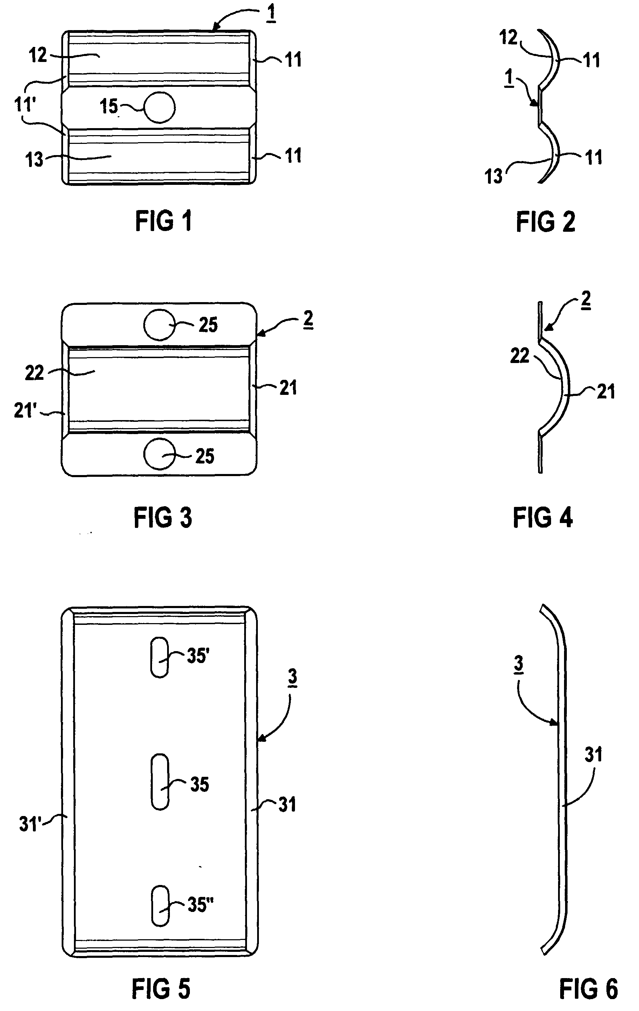

In FIG 1 ist ein Formteil 1 dargestellt, das zur Aufnahme zweier Kabel geeignet und zwei parallele Ausformungen als Längsbetten 12 und 13 aufweist. Es ist wenigstens eine Bohrung 15 für die Aufnahme eines in FIG 1 nicht dargestellten Bolzens vorhanden.

Die Querausbildung der Formteile 1 ist aus FIG 2 entnehmbar. Insbesondere ergibt sich daraus das Aufnahmeprofil mit Längsbetten 12 und 13 für beispielsweise je ein Kabel. Wesentlich ist weiterhin, daß an den beiden Enden des Formteiles 1, insbesondere im Bereich der Längsbetten, das metallische Stanzmaterial 11 abgekröpft ist und in einer leichten Rundung ausläuft. Die Kanten sind dabei in bekannter Weise abgerundet.

Durch spiegelbildliches Zusammenfügen zweier Formteile 1 gemäß FIG 1/2 ergibt sich eine Doppelklemme aus Deckschale und Rückenschale. In Abwandlung zur Darstellung gemäß Fig. 1/2 können die Formteile andere Grundflächen und eine andere Anzahl von Längsbetten haben. Beispielsweise kann ein Formteil zur Führung eines einzigen Kabels mit einem Längsbett, aber zwei Bohrungen für Bolzen ausgebildet sein. Es ist auch möglich, ein Formteil gemäß Figur 1 in der Grundfläche zu verbreitern und mit vier oder mehr Längsbetten zu versehen.

In FIG 3/4 ist ein schellenartiges Formteil 2 dargestellt, das ein Längsbett 22 bildet und jeweils seitlich im Randbereich zwei gleiche Öffnungen 25 für Bolzenverbindungen enthält. An den Enden des Formteiles 2 sind Abkröpfungen 21, 21*'* vorhanden. Durch spiegelbildliches Zusammenfügen zweier Formteile 2 wird eine Einfachschelle gebildet, die ein Kabel weitgehend formschlüssig umgreifen kann,

In FIG 5/6 ist ein großflächiges Formteil 3 dargestellt, das drei Öffnungen 35, 35*'*, 35*''* für eine alternative Ein-, Zwei- oder Dreibolzenverbindung enthält. Das Formteil ist als ebenflächige Schale ohne Längsbetten, aber mit Randprofil ausgebildet, wobei an beiden Auslaufenden wiederum Abkröpfungen 31, 31*'* vorgesehen sind. Durch spiegelbildliches Zusammenfügen zweier Formteile 3 entsteht eine Mehrfachschelle, wobei in diesem Fall die Kabel weitestgehend durch Klemmwirkung gehalten werden.

Die schellenartigen Formteile 1, 2, 3 werden in industrieller Serienfertigung durch Stanzen aus Metall unter Einhaltung engster Fertigungstoleranzen hergestellt. In Frage kommen Stahl St 1203 GK und insbesondere rostfreier Stahl, beispielsweise der Qualität V2A. Dabei wird gleichermaßen beim Stanzen in einem Fließpreßvorgang die Profilgebung der Formteile einschließlich Abkröpfung im Bereich des Auslaufes erzeugt. Nach der Formgebung werden die metallischen Flächen veredelt. Im einzelnen werden Kanten verrundet und anschließend eine Funktionsbeschichtung auf die Formteiloberfläche aufgebracht. Für die Beschichtung kommt insbesondere eine Verzinkung und anschließende Chromatierung in Frage. Wesentlich ist dabei, daß die Funktionsbeschichtung eine solche Dicke hat, welche mit Sicherheit ausschließt, daß durch Korrosion oder andere umweltbedingte Einflüsse bei längerem bestimmungsmäßigen Gebrauch der Systemteile durch Korrosion oder andere umweltbedingte Einflüsse scharfe Kanten oder auch nur mikroskopische Spitzen an den Formteilen entstehen, welche als Unebenheiten die Kabelführung stören und in einem beispielsweise durch Brand verursachten Fehlerfall gefährliche Auswirkungen haben können. Durch eine besonders starke Funktionsbeschichtung von wenigstens etwa 20 µm werden diese Forderungen erfüllt. So kann z.B. eine Verzinkung zunächst mit etwa 20 µm Dicke und anschließend eine Chromatierung mit etwa 4 µm Dicke aufgebracht werden.

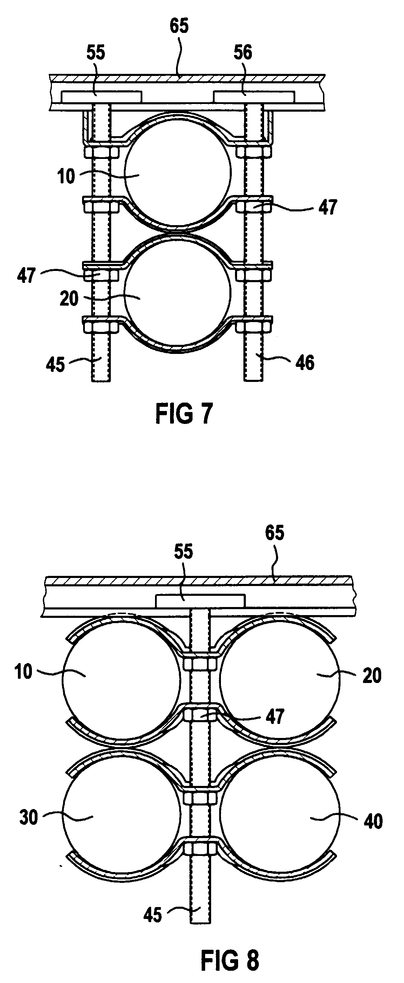

In der FIG 7 ist ein erstes Prüfmuster zur Aufnahme von Kabeln zum Funktionserhalt dargestellt. Es sind Formteile 2 gemäß FIG 3/4 verwendet, von denen zwei Formteile 2 in spiegelbildlicher Anordnung eine Kabelschelle bilden und jeweils ein Kabel 10 aufnehmen, wobei in bekannter Weise zwei Formteile 2 durch Bolzen 45 und 46 miteinander verbunden sind. Die Bolzen 45 und 46 können als Vertikalbolzen mittels Endelementen 55 und 56 in eine in den Figuren nur angedeutete C-Schiene 65 eingeklinkt werden. Die Bolzen 45 und 46 haben jeweils Schraubgewinde, so daß einzelne oder mehrere Muttern 47 aufgedreht werden können. Derartige Muttern 47 halten im vorgegebenen Abstand jeweils einzelne Formteile 2 in Position und dienen damit gleichermaßen als Halterung- und Sicherungselemente für die aus den Formteilen gebildeten Schellen. Speziell in FIG 7 sind zwei Kabel 10 und 20 übereinander angeordnet, von denen wenigstens eines beispielsweise nach DIN VDE 0266 zum Funktionserhalt ausgebildet ist. Eine entsprechende Anordnung für vier Kabel 10 bis 40 unter Einsatz von Doppelschellen aus Formteilen 1 gemäß FIG 1/2 und eines einzigen Bolzens 45 zeigt FIG 8.

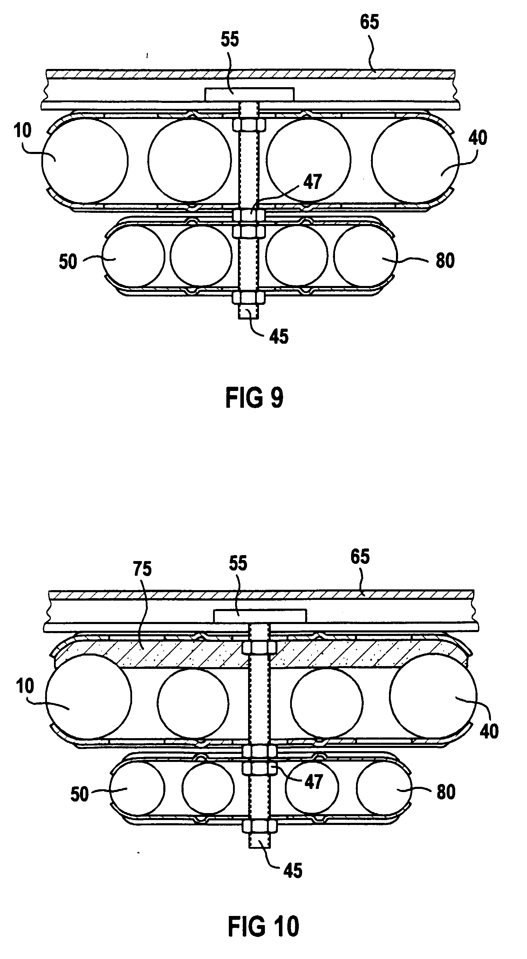

In FIG 9 sind in zwei Ebenen jeweils vier Kabel 10 bis 40, 50 bis 80 geführt, wobei die Kabelquerschnitte in den beiden Ebenen unterschiedlich sind. Es werden durch die Formteile 3 gemäß FIG 5/6, die mittig jeweils drei Längsbohrungen 35, 35*'* und 35*''* haben, Mehrfachschellen gebildet, wobei hier die Mittelbohrung 35 für die Bolzenverbindung eingesetzt wird. Statt über Längsbetten kommt hier die Führung der Kabel durch Klemmwirkung zustande. Diese Anordnung wird über einen einzigen Bolzen 45 mit Gegenstück in eine vorhandene C-Schiene 65 eingeklinkt und dient zur Führung von insgesamt acht Kabeln, wobei in jeder Ebene vier Kabel geführt werden. Die Kabel in den einzelnen Ebenen haben dabei jeweils den gleichen Querschnitt.

Sofern bei der Anordnung gemäß FIG 9 jeweils Kabel mit stark unterschiedlichen Querschnitten geführt werden sollen, können zur Fixierung Schaumstoffeinlagen verwendet werden. Beispielsweise ist in FIG 10, die im wesentlichen FIG 9 entspricht, in der oberen Lage ein Schaumstoffteil 55 vorhanden, das für einen sicheren Sitz der Kabel in der oberen Ebene sorgt. Vorteilhaft ist dabei, daß jedes Leiterpaket zwischen zwei Formteilen mit wenigstens einer Mutter auf dem Vertikalbolzen gesichert werden kann, wodurch jeweils ein separates Sicherungselement realisiert ist.Wenn sich in der Praxis ergibt, daß bei einer Anordnung gemäß den Figuren 7 bis 10 eine weitere Lage zur Kabelführung notwendig ist, lassen sich über entsprechende mechanische Muffen, wie Muttern 48 und 49, die Bolzen 45 bzw. 46 verlängern. Ist beispielsweise ein Verlängerungsbolzen 45' bzw. 46' angebracht, kann damit eine dritte und ggf. vierte Lage von Kabeln aufgenommen werden.

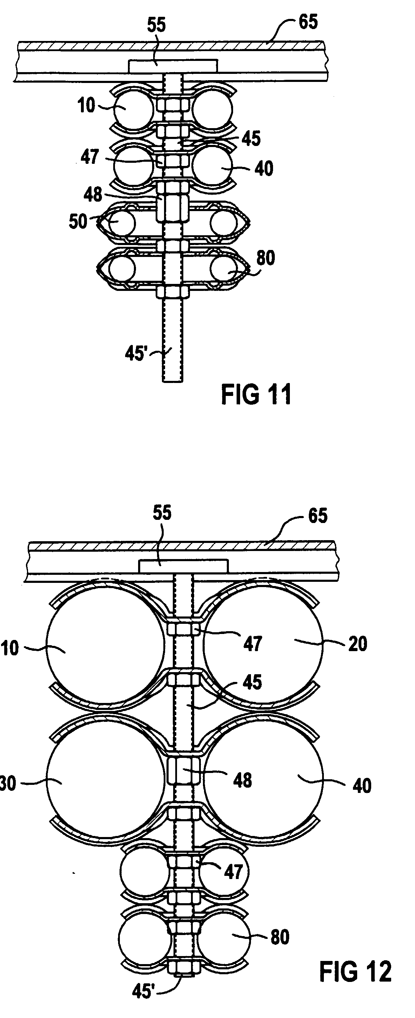

In FIG 11 ist gezeigt, daß mit dem anhand der vorangehenden Figuren beschriebenen System in idealer Weise gleichermaßen Energiekabel, Steuerkabel und/oder Nachrichtenkabel geführt werden können. Hier dienen die Schellenanordnungen in den oberen Ebenen zur Aufnahme von Energieversorgungskabeln 10 bis 40, insbesondere Kabeln mit Funktionserhalt. In der unteren Ebene werden dagegen dünnere Nachrichtenkabel 50 bis 80 geführt. Speziell dabei können auch mehr als jeweils zwei Kabel nebeneinander geführt sein. In FIG 12 ist eine Anordnung mit insgesamt vier unterschiedlichen Ebenen zur Kabelführung dargestellt. Dabei sind hier die Schellen derart ausgebildet, daß jede Schelle entsprechend FIG 1/2 zwei Kabel führt. Der Bolzen 45 kann entsprechend den aktuellen Bedürfnissen verlängert werden. Letzteres ergibt sich im einzelnen anhand einer Abwandlung von FIG 8. Mit einem Standardbolzen 45 sind zwei Lagen von Kabeln führbar, wobei durch Verlängerungsbolzen 45*'*, die beispielsweise aus einem Gewindestift mit mechanisch fest verbundener Mutter 48 zur Aufnahme des Gewindebolzens 45 besteht, eine dritte und vierte und gegebenenfalls weitere Ebenen hinzufügbar sind. Dies kann vor Ort anhand jeweiliger Notwendigkeiten - bei der Erstinstallation oder im Rahmen von Nachrüstungen - erfolgen

Bei den Ausführungsbeispielen gemäß den Figuren 7 bis 13 sind die verwendeten Formteile entsprechend FIG 1/2, FIG 3/4 und/oder FIG 5/6 ausgebildet. Somit erfüllen die beschriebenen Anordnungen die Erfordernisse gemäß DIN 4102-12. Hierfür wurden die amtlichen Prüfungen bei einem Schellenabstand von 350 mm durchgeführt. Vorteilhaft sind bei den beschriebenen Anordnungen insbesondere die Mehrfachbelegungen, welche nunmehr erstmalig möglich sind. Weiterhin ist vorteilhaft, daß zwischen zwei Halterungen ein vergleichsweise großer Abstand liegen kann. Insbesondere wurde auch ein Abstand von >350 mm noch als hinreichend befunden. Auch bei diesen Abständen ist durch die Ausbildung der einzelnen schellenartigen Formteile mit Abkröpfungen eine solche Führung der Kabel und Leitungen sichergestellt, daß keine Beschädigungen entstehen und insbesondere im Brandfall der Funktionserhalt gewährleistet ist.

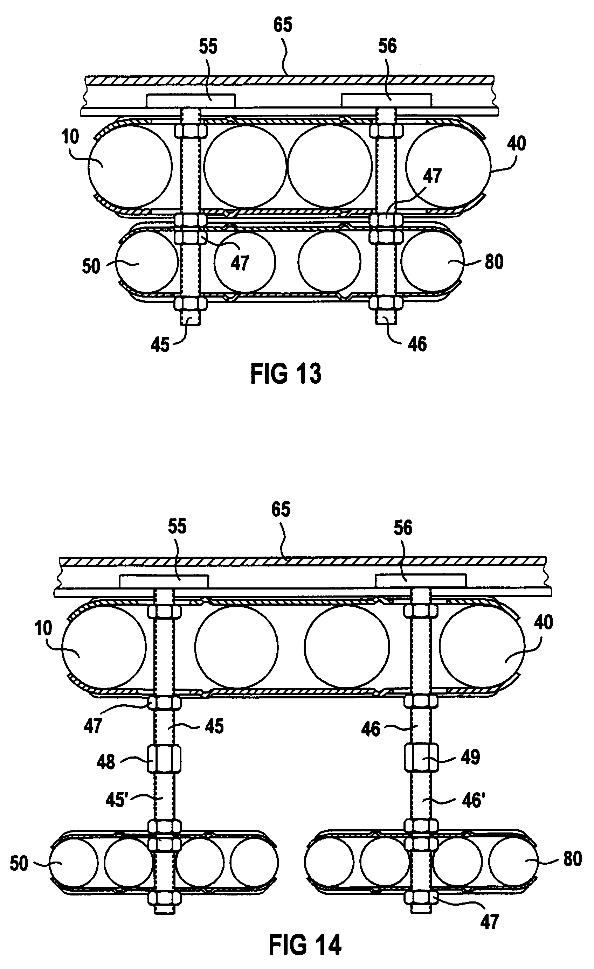

In Figur 13 und 14 sind Anordnungen mit weitere Sicherheitsvorkehrungen dargestellt: Es sind jeweils zwei Vertikalbolzen zur Halterung der als Wannen ausgebildeten Formteile vorhanden. In Abweichung zu Figur 13 können die Kabel mit größerem Querschnitt in der unteren Lage angeordnet sein. In Figur 14 sind in der oberen Lage die Kabel mit größerem Querschnitt und - davon beabstandet - in der unteren Lage an jedem Bolzen einzelne Schellen für Leitungen mit geringerem Querschnitt angebracht. Wesentlich ist dabei, daß die Abstände der einzelnen Lagen einstellbar und jeweils über die einzelnen Muttern als Sicherungselemente separat fixierbar sind. Dadurch ist jederzeit ohne zusätzlichen Aufwand eine Modifizierung hinsichtlich des Systemaufbaus zur Gewährleistung der elektromagnetischen Verträglichkeit möglich. Dies ist insbesondere bei paralleler Verlegung von Funktionserhaltkabeln und informationstechnischen Leitungen von Bedeutung.

## Patentansprüche

1. System zur Befestigung und/oder Führung von isolierten elektrischen Leitungen und/oder Kabeln, mit mindestens einem schellenartigen Formteil, das zur Führung wenigstens einer Leitung und/oder eines Kabels ausgebildet ist, wobei mehrere schellenartige Formteile wechselseitig miteinander verbindbar und zu einer den jeweiligen Anforderungen entsprechenden Anordnung für eine Mehrzahl von Leitungen und/oder Kabeln aufbaubar sind, **dadurch gekennzeichnet,** daß von der Anordnung wenigstens ein Kabel (10) zum Funktionserhalt umschlossen wird, wozu das schellenartige Formteil (1, 2, 3) an den beiden Enden abgekröpft ausgebildet und zumindest in diesem Bereich mit einer Funktionsbeschichtung gegen Korrosion und Ausbildung von Unebenheiten aufgrund von Korrosion auf der Oberfläche versehen ist, so daß auch im Fehlerfall das Kabel (10, 20, ...) zum Funktionserhalt derart geführt bleibt, daß ein Kurzschluß der metallischen Leiter durch die Unebenheiten, insbesondere Kanten, des Formteils (1, 2, 3) ausgeschlossen ist, und daß in der Anordnung neben dem wenigstens einen Kabel (10) zum Funktionserhalt weitere Leitungen und/oder Kabel (20, 30, ...) gleichen oder unterschiedlichen Querschnittes neben- und/oder übereinender parallel geführt werden.

2. System nach Anspruch 1, **dadurch gekennzeichnet,** daß die Abkröpfung des schellenartigen Formteiles (1, 2, 3) kontinuierlich ohne Knick verläuft.

3. System nach Anspruch 1 oder Anspruch 2, **dadurch gekennzeichnet,** daß die Abkröpfung des schellenartigen Formteiles (1, 2, 3) entsprechend vorgegebener Rundung erfolgt.

4. System nach einem der vorhergehenden Ansprüche, **dadurch gekennzeichnet,** daß die Kanten des Formteils (1, 2,3) abgerundet sind.

5. System nach einem der vorhergehenden Ansprüche, **dadurch gekennzeichnet,** daß das schellenartige Formteil (1, 2, 3) aus Metall besteht, auf das die Beschichtung durch Verzinkung und Chromatierung aufgebracht ist.

6. System nach einem der vorhergehenden Ansprüche, **dadurch gekennzeichnet,** daß die Beschichtung eine Dicke von wenigstens etwa 20 µm hat.

7. System nach einem der vorhergehenden Ansprüche, **dadurch gekennzeichnet,** daß das Kabel (10) zum Funktionserhalt aus mehreren metallischen Leitern besteht, die jeweils von einer elektrisch isolierenden Schicht, beispielsweise aus Glimmerband, umgeben sind, wobei die Leiter in einem Kunststoffmantel eingebettet sind.

8. System nach einem der vorhergehenden Ansprüche, **dadurch gekennzeichnet,** daß das Kabel (10) zum Funktionserhalt eine Klassifizierung nach DIN 4102-12 hat.

9. System nach einem der Ansprüche 1 bis 8, **dadurch gekennzeichnet,** daß mehrere schellenartigen Formteile (1, 2, 3) wenigstens jeweils ein Kabel und/oder eine elektrische Leitung (10, 20, 30, ...) umgreifen.

10. System nach einem der Ansprüche 1 bis 8, **dadurch gekennzeichnet,** daß das Formteil (1) wenigstens zwei Längsbetten (12, 13) zur Bildung einer Doppel- oder Mehrfachschelle hat. (FIG 1/2)

11. System nach einem der Ansprüche 1 bis 8, **dadurch gekennzeichnet,** daß das Formteil (2) ein einziges Längsbett (22) zur Bildung einer Einfachschelle hat. (FIG 3/4)

12. System nach einem der Ansprüche 1 bis 8, **dadurch gekennzeichnet,** daß das Formteil (3) ebenflächig zur Bildung einer Mehrfachschelle ausgebildet ist. (FIG 5/6)

13. System nach Anspruch 10, 11 oder 12, **dadurch gekennzeichnet,** daß jeweils zwei spiegelbildlich zueinander angeordnete Formteile (1, 2, 3) eine Doppel-, Einfach oder Mehrfachschelle bilden.

14. System nach Anspruch 13 **dadurch gekennzeichnet,** daß mehrere schellenartige Formteile (1, 2, 3) vertikal übereinander angeordnet sind und in einzelnen vertikalen Ebenen eine Anzahl von elektrischen Leitungen und/oder Kabeln (10, 20, ...) unschließen.

15. System nach Anspruch 9 oder einem der Ansprüche 10 bis 12, **dadurch gekennzeichnet,** daß die schellenartigen Formteile (1, 2, 3) durch wenigstens einen Vertikalbolzen (45, 46) miteinander verbunden sind.

16. System nach Anspruch 15, **dadurch gekennzeichnet,** daß zwei oder mehr parallele Vertikalbolzen (45, 46) vorhanden sind.

17. System nach Anspruch 15 oder 16, **dadurch gekennzeichnet,** daß die Vertikalbolzen (45, 46) eine vorgegebene Länge zur Befestigung einer Anzahl von schellenartigen Formteilen (1, 2, 3) haben.

18. System nach Anspruch 17, **dadurch gekennzeichnet,** daß die Vertikalbolzen (45, 46) über Zwischenstücke (45*'*, 46*'*) verlängerbar sind.

19. System nach Anspruch 18, **dadurch gekennzeichnet,** daß die Vertikalbolzen (45, 46) endseitig mittels eines Halteelementes (55) in einer C-Schiene (65) befestigt sind.

20. System nach einem der vorhergehenden Ansprüche, **dadurch gekennzeichnet,** daß zur Fixierung von Leitungen und/oder Kabel (10, 20, ...) unterschiedlicher Querschnitte zwischen zwei spiegelbildlich angeordneten Formteilen (1, 2, 3) Schaumstoffteile (75) einlegbar sind.

21. System nach Anspruch 1, **dadurch gekennzeichnet,** daß jedem schellenartigen Formteil (1, 2, 3) eigene Sicherungselemente (47, 48, 49), die die Formteile (1, 2, 3) an vertikalen Bolzen (45, 45*'*; 46, 46*'*) fixieren, zugeordnet sind.

22. System nach Anspruch 21, **dadurch gekennzeichnet,** daß die Sicherungselememte auf die Vertikalbolzen (45, 45*'*) aufschraubbare Muttern (47, 48, 49) sind.
